# EUROPEAN PATENT APPLICATION

(11) **EP 4 480 870 A1**
(43) Date of publication of application: **25.12.2024**
(21) Application number: 24181367.4
(22) Date of filing: 11.06.2024
(51) Int. Cl.: B65G 54/02, H02K 41/03

(54) **CONVEYOR DEVICE FOR A PACKAGING MACHINE AND PACKAGING MACHINE**

(30) Priority: 22.06.2023 IT 202300012909
(71) Applicant: Tetra Laval Holdings & Finance S.A., 1009 Pully (CH)
(72) Inventor: PICCININI, Giorgio, 41123 MODENA (IT); CALTABIANO, Daniele, 41123 MODENA (IT); ROSSI, Stefano, 41123 MODENA (IT); FIACCO, Andrea, 41123 MODENA (IT); CARULLI, Paola, 41123 MODENA (IT)
(74) Representative: Tetra Pak - Patent Attorneys SE

(57) **Abstract**

There is described a conveyor device (6) for advancing articles (2) and comprising: a plurality of carriers (7), each carrier (7) being configured to receive and carry at least one article (2) and including at least one electrically-powerable component (10, 18) and a receiver (8) configured for receiving electrical energy and powering the component (10, 18); a planar motor (11) configured to move the carriers (7) selectively and independently from one another; at least one powering station (P); and a transmitter (12) located at the powering station (P) and configured for transmitting electrical energy; the planar motor (11) is configured to selectively move each carrier (7) through said powering station (P), whereby the receiver (8) receives electrical energy from the transmitter (12) thereby powering the component (10, 18).

## Description

### TECHNICAL FIELD

The present invention relates to a conveyor device for a packaging machine, in particular a conveyor device configured for advancing articles within such packaging machine.

In particular, the present invention will refer, without however losing on generality, to a conveyor device for advancing packages containing a pourable product, preferably a pourable food product, in a packaging machine configured for forming, sealing and folding a plurality of packages containing the pourable product.

### BACKGROUND ART

As it is generally known, many pourable food products, such as fruit juice, UHT (ultra-high temperature-treated) milk, wine, tomato sauce, etc., are sold in packages made of sterilized packaging material.

A typical example is the parallelepiped-shaped package for pourable food products known as Tetra Brik Aseptic (registered trademark), which is made by folding and sealing a laminated web of packaging material. The packaging material has a multilayer structure comprising a base layer, e.g. made of paper, covered on both sides with layers of heat-seal plastic material, e.g. polyethylene.

In the case of aseptic packages for long-storage products, such as UHT milk, the packaging material also comprises a layer of oxygen-barrier material, e.g. an aluminum foil, which is superimposed on a layer of heat-seal plastic material, and is in turn covered with another layer of heat-seal plastic material forming the inner face of the package eventually contacting the food product.

Packages of this sort are normally produced on fully automatic packaging machines, which form and fill the packages starting from a multilayer packaging material.

In particular, in such packaging machines a continuous tube is formed starting from a web of packaging material initially wound in a reel and fed through a plurality of unwinding rollers. The web of packaging material is sterilized in the packaging machine, e.g. by applying a chemical sterilizing agent, such as hydrogen peroxide solution, which, once sterilization is completed, is removed from the surfaces of the packaging material, e.g. evaporated by heating. The web so sterilized is then maintained in a closed, sterile environment, and, advanced by the aforementioned unwinding rollers, is folded and sealed longitudinally to form the tube by means of a known web folding unit.

The tube is fed continuously along a first direction, normally a straight vertical direction, is filled with the sterilized food product from above and is formed, sealed and subsequently cut along equally spaced transversal cross-sections extending along a second direction, normally a direction orthogonal to the first direction.

In order to perform the forming and sealing operations, the known packaging machines comprise a forming unit configured to form the tube, so as to imprint an external shape to it corresponding to the desired shape of the package, and a sealing unit configured to seal the tube at equally spaced cross-sections orthogonal to the tube advancement direction.

Generally, a packaging machine of the above type comprises a pair of alternately movable forming and sealing jaws which are controllable with a reciprocating movement in the first direction and in a third direction orthogonal to the first direction and second direction to interact with the tube at successive portions thereof.

So-called pillow packs are obtained thereby, which have a longitudinal sealing band, a top transversal sealing band and a bottom transversal sealing band. The pillow packs are then cut at the cross-sections to be separated from one another and directed to a folding unit of the packaging machine for the final folding thereof.

Once the cutting operation is complete, the sealing unit and the forming unit are moved to be ready to grip another subsequent portion of the tube.

The finished packages are thereby obtained.

Conveyor devices are known in the field, which are interposed between certain units of the packaging machines.

For example, at least one conveyor device is interposed between the sealing unit and the folding unit, in order to advance the pillow packs already separated from one another towards the folding unit.

Another conveyor device is known for advancing the finished packages (i.e. the formed, sealed, separated and folded packages) from the final folding unit towards a downstream unit, such as a grouping/palleting unit.

For example, a conveyor device of this sort comprises a belt system defining a conveying path and having a pair of endless (or closed-loop) belts arranged facing one another at opposite sides of the conveying path. Each package is gripped (squeezed) between the two facing belts, which mutual movement determines the advancement of the gripped package along the conveying path. In this way, the packages are advanced in succession along the conveying path and between the two units.

A need is felt in the field for handling the packages after their formation in a more flexible manner, in particular to transport the packages in a more flexible, and also scalable, manner.

A further need is felt in the field for reducing the wear of the components of the known packaging machines, and especially of the conveyor devices thereof.

An additional need is felt in the field for simplifying the architecture of the known packaging machines and for reducing the number of components.

### DISCLOSURE OF INVENTION

It is therefore an object of the present invention to provide a conveyor device for advancing articles, preferably a conveyor device for a packaging machine which is configured for advancing packages containing a pourable product, which is designed to meet at least one of the above-mentioned needs in a straightforward and low-cost manner.

This object is achieved by a conveyor device as claimed in claim 1.

### BRIEF DESCRIPTION OF THE DRAWINGS

A non-limiting embodiment of the present invention will be described by way of example with reference to the accompanying drawings, in which:
Figure 1 is a schematic perspective view of a packaging machine including a conveyor device according to the present invention, with parts removed for clarity;
Figure 2 is a schematic top view, with parts removed for clarity, of the conveyor device according to the present invention;
Figure 3 is a perspective view, with parts removed for clarity, of a carrier of the conveyor device according to the invention;
Figure 4 is a larger-scale, schematic side view, with parts removed for clarity, of the conveyor device according to the invention; and
Figures 5a to 5c are schematic lateral views, with parts removed for clarity, of a portion of the conveyor device according to the invention during distinct operative conditions.

### BEST MODE FOR CARRYING OUT THE INVENTION

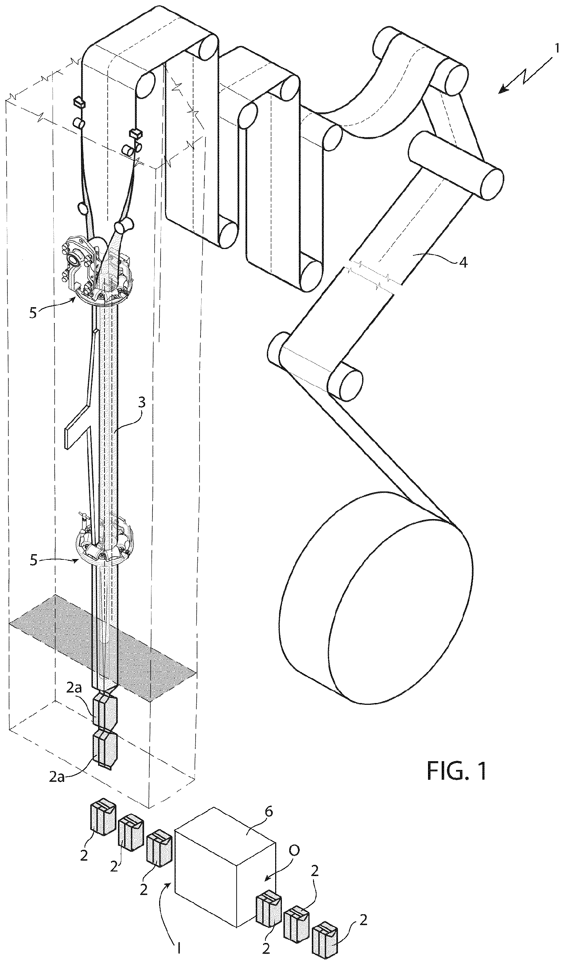

With reference to Figure 1, number 1 indicates as a whole a non-limiting example of a packaging machine for producing a plurality of packages 2 containing a pourable product, preferably a pourable food product such as pasteurized or UHT milk, water, fruit juice, wine, peas, beans, etc.

In detail, packaging machine 1 is configured for forming, sealing and folding such packages 2 starting from a tube 3 of packaging material.

Preferably, the packaging material has a multilayer structure (not shown), and comprises a layer of fibrous material, e.g. paper, covered on both sides with respective layers of heat-seal plastic material, e.g. polyethylene.

In the case of aseptic packages 2 for long-storage products, such as UHT milk, the packaging material also comprises a layer of gas-and-light barrier material, e.g. aluminum foil or ethylene vinyl alcohol (EVOH) film, which is superimposed on a layer of heat-seal plastic material, and is in turn covered with another layer of heat-seal plastic material, the latter forming the inner face of package 2 eventually contacting the pourable product.

Preferably, the packaging material is initially provided in form of a web 4.

As schematically shown in Figure 1, the packaging machine 1 comprises:
- tube folding devices 5 for progressively folding the web 4 into tube 3, in a manner known and not described in detail, and to longitudinally seal tube 3;
- a filling device (not shown) for filling tube 3 with the pourable product;
- a forming and sealing device (not shown) for forming and sealing tube 3, thereby obtaining a plurality of pillow packs 2a, according to a manner known and not described in detail; and
- a pillow pack folding device (not shown) for folding the pillow packs 2a, thereby obtaining said packages 2, according to a manner known and not described in detail.

Hence, the packaging machine 1 is configured to form and seal a plurality of pillow packs 2a containing the pourable product starting from web 4 and tube 3 and then to fold the pillow packs 2a for obtaining the aforementioned formed, sealed and folded packages 2 containing the pourable product.

Packaging machine 1 further comprises at least one conveyor device 6 for advancing packages 2.

According to this preferred non-limiting embodiment, conveyor device 6 is configured to receive packages 2 from the pillow pack folding device and to advance the received packages 2 further on down the packaging machine 1 (or the packaging line) up to a downstream unit, e.g. towards a grouping/palletting unit.

According to an alternative embodiment, conveyor device 6 could receive and advance pillow packs 2a, for example from the forming and sealing device towards the pillow pack folding device.

In general, the conveyor device 6 according to the invention is configured to receive and advance articles, which in the present case are defined by sealed packages 2 containing pourable product, which the present description will refer to without however losing on generality.

According to some possible non-limiting embodiments, packaging machine 1 may comprise more than one conveyor device 6. Two or more conveyor devices 6 may be arranged parallel to one another; i.e. each conveyor device 6 may receive, in use, a respective portion of packages 2.

Alternatively or in addition, two or more conveyor devices 6 may be arranged in series to one another; i.e. two or more conveyor devices 6 advance a plurality of the same packages 2.

Conveyor device 6 is configured to advance packages 2 from an inlet station I to an outlet station O.

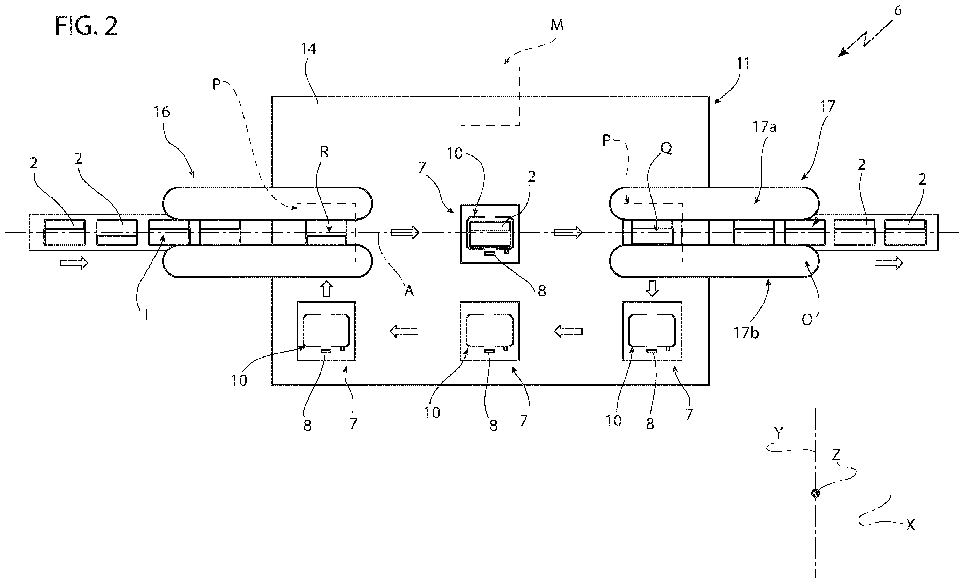

With reference to Figures 2 to 5c, conveyor device 6 (or each conveyor device 6, in case more than one is present in packaging machine 1) comprises:
- a plurality of carriers 7 each configured to receive and carry at least one package 2 and each including at least one electrically-powerable component 10, 18 and a receiver 8 configured for receiving electrical energy and powering the component 10, 18;
- a planar motor 11 configured to move carriers 7 selectively and independently from one another;
- at least one powering station P; and
- a transmitter 12 located at the powering station P and configured for transmitting electrical energy.

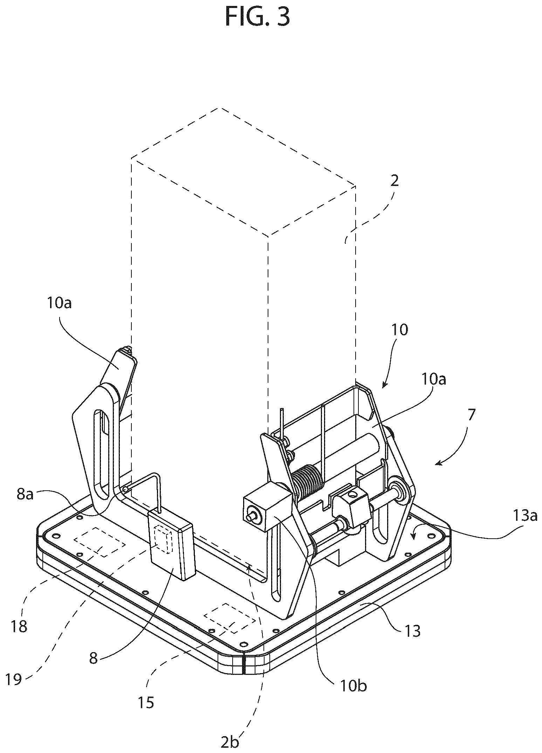

In detail, as shown in Figure 3, each carrier 7 comprises a support plate or platform 13 configured to receive and support a respective package 2.

In greater detail, each support plate 13 is configured to receive and support at least one package 2 at a time on an upper surface 13a thereof.

Each package 2 has a bottom wall 2b. In the non-limiting example shown, each package 2 is configured to be received on upper surface 13a by standing on its bottom wall 2b.

Preferably, planar motor 11 is of the known type and includes:
- an inductive base element or table or surface 14 equipped with electrically-powerable inductive coils (not shown); and
- a plurality of magnetic and/or ferromagnetic elements (not shown), such as permanent magnets, each embedded in one respective carrier 7, and more precisely in one respective support plate 13, and configured to electromagnetically interact with the induction coils to determine the movement of the respective carrier 7 over and along the table 14.

Hence, planar motor 11 is configured to control a selective movement of the carriers 7 along table 14 so that support plates 13 move independently from one another along the table 14.

In further detail, planar motor 11 may be configured to selectively control movement of each carrier 7 independently from the other carriers 7. In this context, independently means that planar motor 11 may accelerate and decelerate each carrier 7 in a selective manner, which may differ from any acceleration and deceleration of other carriers 7. Furthermore, planar motor 11 may control movement of each carrier 7 such to avoid any undesired impact with the one or more other carriers 7.

To this end, planar motor 11 may include a control unit (not shown) for controlling and managing the movement of the carriers 7 along the table 14.

According to some preferred non-limiting embodiments, planar motor 11 may be configured to control each carrier 7 along three linear axes and around three rotational axes. In other words, each carrier 7 comes along with six degrees of freedom.

Even more specifically, planar motor 11 may be configured to control movement of each carrier 7 along a first linear axis X, a second linear axis Y perpendicular to the first linear axis X and a third linear axis Z perpendicular to the first linear axis X and the second linear axis Y (Figure 2). In this way, it is possible to control the position of each carrier 7 (and therewith also of the respective packages 2) in a three-dimensional space.

Moreover, planar motor 11 may be configured to control angular movements of each carrier 7 around a respective first rotation axis, a respective second rotation axis perpendicular to the first rotation axis and a third rotation axis perpendicular to the first rotation axis and the second rotation axis. This allows to control the angular positions of carriers 7 (and therewith also of the respective packages 2).

By providing for six-degrees of freedom, it is possible to precisely control angular and spatial positions of packages 2, e.g. with respect to table 14.

According to an important aspect of the present invention, planar motor 11 is configured to selectively move each carrier 7 through powering station P, whereby receiver 8 receives electrical energy from transmitter 12 thereby powering the aforesaid component 10, 18.

Each carrier 7 is configured to advance the respective package 2 along an advancement path A extending from a receiving station R to a releasing station Q (Figure 2).

Expediently, both receiving station R and releasing station Q are arranged over table 14.

According to the invention, the advancement path A extends, at least in part, through the powering station P.

In one embodiment, the transmitter 12 comprises an energizing track 12a which extends along part of the advancement path A, and in particular of powering station P, and which is configured for energizing the receiver 8 with electrical energy.

Accordingly, each carrier 7 is configured to advance (during its movement through powering station P) the receiver 8 along energizing track 12a, so that the receiver 8 interacts therewith and is thus energized.

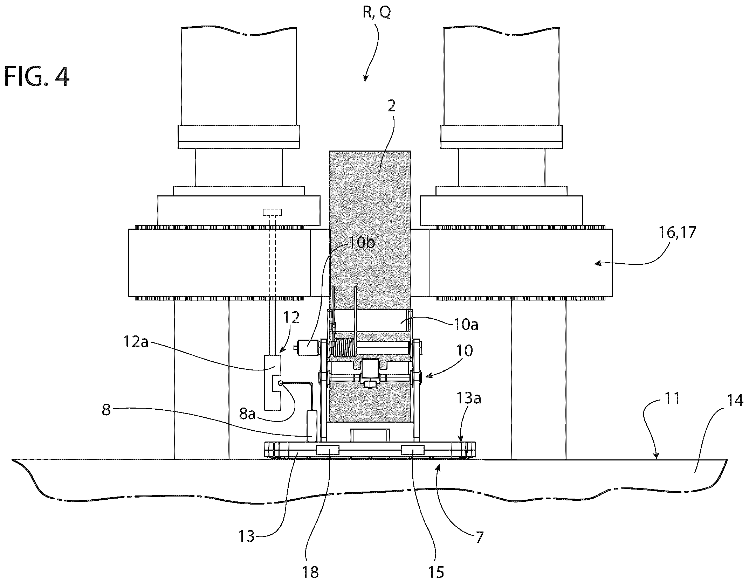

In particular, as seen in Figure 4, energizing track 12a may have a C-shaped profile. In this case, each receiver 8 may comprise a receiving portion 8a which is configured to engage the concave part of the energizing track 12a during the passage of the respective carrier 7 through the powering station P.

Alternatively, the receiving portion 8a may have a C-shaped profile and the energizing track 12a may engage the concavity of the C-shaped receiving portion 8a for transmitting energy thereto during the passage of the respective carrier 7 through the powering station P.

According to the invention, powering station P is located at receiving station R and/or at releasing station Q, as better explained below.

Advantageously, the transmitter 12 is configured for transmitting electrical energy to the receiver 8 by means of wireless transfer.

This allows for a substantial reduction of wear due to contactless interaction between these two.

Preferably, transmitter 12 includes a first electric circuit and receiver 8 includes a second electric circuit. The transmission of electrical energy from the first electric circuit to the second electric circuit occurs by means of electrical induction, thereby defining the wireless transfer (i.e. the wireless electrical connection) between transmitter 12 and receiver 8.

Alternatively, transmitter 12 and receiver 8 may cooperate in sliding contact with one another, for example by means of electrically conductive brushes. In this case, the transfer of electrical energy may be more effective and with less dispersions, albeit entailing an increased wear with respect to the aforesaid wireless transfer.

In use, as said, the planar motor 11 controls the movement of each carrier 7 along the advancement path A and through the powering station P.

Upon passage of the carrier 7 at the powering station P, the receiver 8 interacts with the transmitter 12, thereby receiving electrical energy and powering the component 10, 18.

It is specified that, according to the invention, the transmitter 12 is conveniently spaced apart from said table 14 and electrically separated from the inductive coils thereof.

In light of the above, each carrier 7 can gather electrical energy for powering an electrically-powerable component 10, 18 thereof in a relatively simple manner and without interfering with the electric powering of the carrier 7 itself (and especially of the support plate 13 thereof) by means of the planar motor 11.

Advantageously, each carrier 7 further comprises a control unit 15 (only schematically shown) connected to the receiver 8 and to the component 10, 18 and configured to be supplied with electrical energy by receiver 8 and to control an activation of the component 10, 18.

Preferably, control unit 15 is embedded in support plate 13.

Upon passage of the carrier 7 at the powering station P, the receiver 8 interacts with the transmitter 12, thereby receiving electrical energy. Consequently, receiver 8 supplies control unit 15 with the received electrical energy. Control unit 15 can therefore control the component 10, 18.

According to a preferred embodiment of the present invention, each carrier 7 comprises a gripping unit 10 configured to grip said at least one package 2 at a time at the receiving station R, to retain such package 2 during the movement (advancement) of the carrier 7, and to release such article at the releasing station Q.

According to such preferred embodiment, said electrically-powerable component comprises gripping unit 10. In particular, gripping unit 10 defines said electrically-powerable component.

In particular, gripping unit 10 comprises:
- a gripper member 10a controllable in an open configuration, for receiving or releasing the respective package 2, and in a closed configuration, for gripping and retaining the respective package 2; and
- an actuator member 10b for controlling the gripper member 10a between the open configuration and the closed configuration.

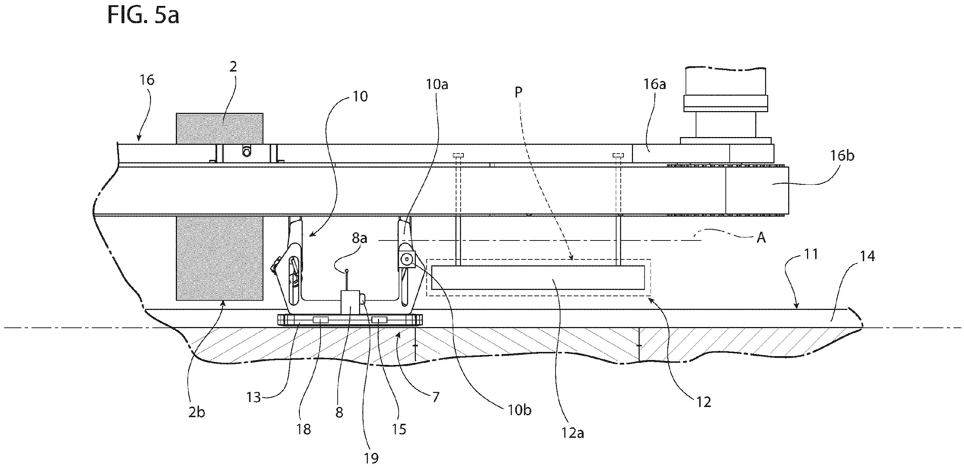

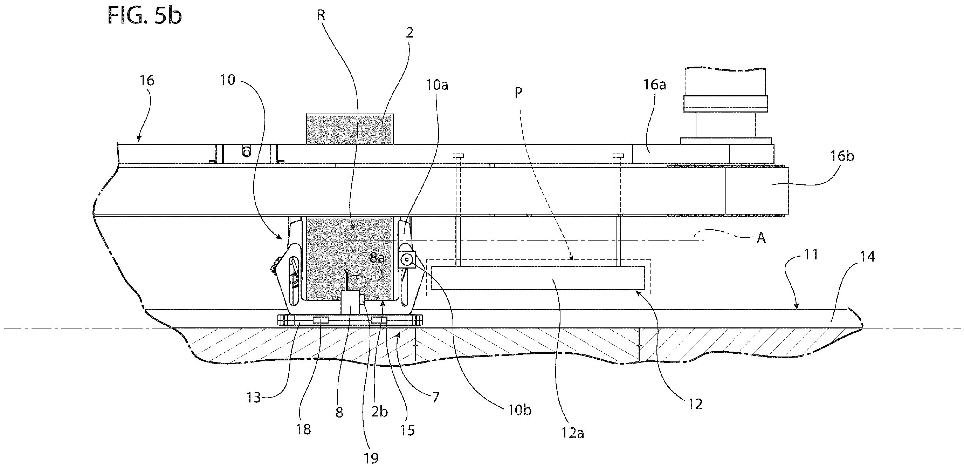

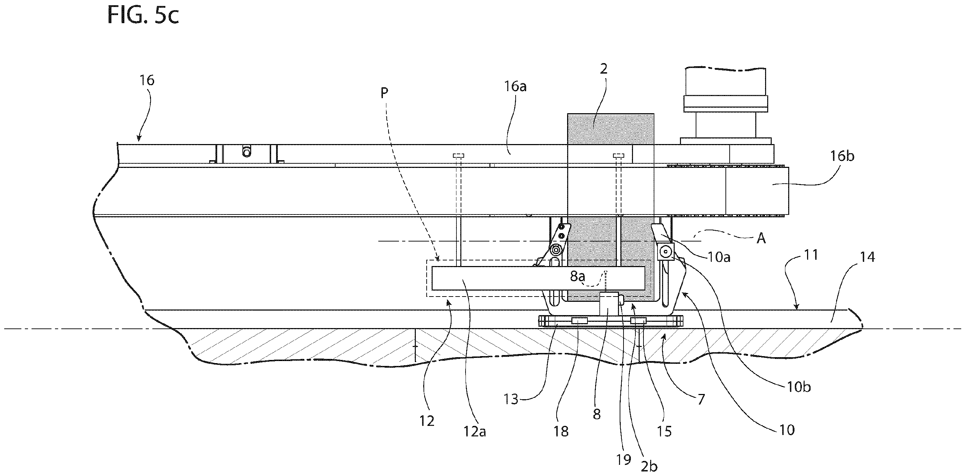

Figures 5a and 5b show the gripper member 10a in the aforesaid open configuration, while Figure 5c shows the gripper member 10a in the aforesaid closed configuration.

For the sake of brevity, reference is made in the following to a single carrier 7. All the features disclosed hereinafter are equally applicable to each carrier 7.

According to the invention, the receiver 8 is configured for powering the actuator member 10b with electrical energy received from the transmitter 12 at the powering station P.

In detail, when the carrier 7 is moved (by planar motor 11) through powering station P, energizing track 12a and receiving portion 8a interact with one another (preferably by means of the aforesaid wireless connection). Consequently, the receiver 8 supplies control unit 15 with the received electrical energy. Control unit 15 then controls the actuator member 10b, which in turn drives gripper member 10a between the open configuration and the closed configuration.

As said, carrier 7 is configured to advance (or carry) the respective package 2 along the advancement path A from receiving station R to releasing station Q. Furthermore, gripper member 10a grips the received package 2 at the receiving station R and releases the gripped package 2 at the releasing station Q.

To this end, in one embodiment conveyor device 6 preferably comprises:
- a first powering station P with a first transmitter 12 located at receiving station R, for transmitting electrical energy to the component of carrier 7, and in particular to gripping unit 10 of carrier 7; and
- a second powering station P with a second transmitter 12 located at releasing station Q (and not shown), for transmitting electrical energy to the component of carrier 7, and in particular to gripping unit 10 of carrier 7.

Conveniently, second powering station P is substantially identical to first powering station P. Similarly, first transmitter 12 is substantially identical to second transmitter 12 (i.e. it comprises an energizing track 12a of the aforementioned type).

In light of the above, at receiving station R actuator member 10b drives the gripper member 10a from the open configuration to the closed configuration for gripping the received package 2, while at the releasing station Q actuator member 10b drives the gripper member 10a from the closed configuration to the open configuration for releasing the advanced package 2.

More specifically, as shown in Figures 5a to 5c, carrier 7 is moved in use (by planar motor 11) up to the receiving station R (Figure 5a); after support plate 13 of carrier 7 receives a package 2 at receiving station R (Figure 5b), such support plate 13 passes through the first powering station P, along which the receiver 8 and the first transmitter 12 interact with one another. Thanks to such interaction according to the present invention, the actuator member 10b is powered with electrical energy, and in turn gripper member 10a is driven to the closed configuration (Figure 5c).

The respective package 2 is thereby retained.

Once package 2 has been retained and gripped, carrier 7 advances the received and gripped package 2 along the advancement path A towards the releasing station Q (Figure 2) .

As described above for the first powering station P and the receiving station R, carrier 7 is moved (by planar motor 11) up to the releasing station Q; there, receiver 8 interacts with the second transmitter 12 and powers again the actuator member 10b. Thanks to such interaction according to the present invention, the actuator member 10b is powered with electrical energy, and in turn gripper member 10a is driven to the open configuration.

The respective package 2 is thereby released.

Carrier 7 is then moved by planar motor 11 away from the releasing station Q and the advancement path A and again towards the receiving station R, at which such carrier 7 will receive a new package 2 to be conveyed. This is repeated in a cyclical manner.

In this way, a relatively simple, reliable, flexible, safe and wearproof conveyor device 6 for transporting the packages 2 is obtained.

In fact, wear is substantially reduced, if not eliminated, due to the fact that support plates 13 levitate over table 14 and due to the fact that receivers 8 and transmitters 12 interact with one another with little or no contact.

Moreover, thanks to the planar motor 11 system, the movement of carriers 7 is very flexible, with respect for example to a simple belt conveyor, and thus easily adaptable to any variation in production speed.

Preferably, conveyor device 6 further comprises:
- an inlet conveyor 16 configured to advance a sequence of packages 2 from the inlet station I to the receiving station R, at which each package 2 is transferred from the inlet conveyor 16 onto a respective carrier 7; and
- an outlet conveyor 17 configured to advance the packages 2 from the releasing station Q, at which each package 2 is released from the respective carrier 7, to the outlet station O.

Accordingly, first powering station P and first transmitter 12 are located at inlet conveyor 16, whereas second powering station P and second transmitter 12 are located at outlet conveyor 17.

According to this non-limiting embodiment shown, inlet conveyor 17 and outlet conveyor 17 are defined by belt conveyors, each including a pair of endless belts which faces one another for a part thereof and which are configured to retain each package 2 at its side walls.

Conveniently, planar motor 11 is configured to synchronize the advancement of each carrier 7 with respect to the respective package 2, when, in use, the respective package 2 is advanced by the respective inlet conveyor 16 or the respective outlet conveyor 17.

Conveniently, inlet conveyor 16 and outlet conveyor 17 extend, at least in part, over table 14, thereby reaching receiving station R and releasing station Q.

Expediently, inlet conveyor 16 and outlet conveyor 17 are configured to advance each package 2 such that each package 2 is, in use, spaced apart from table 14 of planar motor 11 in a manner that a respective interspace between table 14 and packages 2 forms, thereby allowing each support plate 13 to engage such interspace and to interpose between the respective package 2 and table 14.

In this manner, it is possible to place support plates 13 between table 14 and packages 2, such to arrange packages 2 onto support plates 13 from inlet conveyor 16 at receiving station R, and such to delivery packages 2 from support plates 13 and on outlet conveyor 17 at releasing station Q (Figures 4 and 5a to 5c).

Accordingly, by its movement along advancement path A, each carrier 7 is configured to advance the respective package 2 from inlet conveyor 16 to outlet conveyor 17.

Advantageously, the aforesaid first transmitter 12 is fixed to the inlet conveyor 16. Similarly, the aforesaid second transmitter 12 is fixed to the outlet conveyor 17.

For example, first transmitter 12 may be coupled to inlet conveyor 16 so as to overhang from a frame 16a thereof and so as to be interposed between table 14 and a belt member 16b thereof.

Similarly, second transmitter 12 may be coupled to outlet conveyor 17 so as to overhang from a frame thereof 17a and so as to be interposed between table 14 and a belt member 17b thereof.

Thanks to this configuration, transmitters 12 can be fitted in conveyor device 6 in a simple manner and without hindering the movement of carriers 7 over table 14 (for example with respect to the case in which transmitters 12 were fixed to table 14).

In one embodiment, carrier 7 may include at least one sensor member 18 configured to detect a physical quantity correlated with, i.e. indicative of, the package 2 received by the carrier 7 itself. The sensor member 18 may be positioned on a surface of the carrier 7 or the sensor member 18 may be embedded within the carrier 7.

As an example, sensor member 18 may be configured to detect one or more of the following physical quantities:
- a weight of the package 2;
- a fill level of the package 2, in particular a fill level with the aforesaid pourable product;
- the presence of the package 2 on the carrier 7;
- a nominal positioning of the package 2 on the carrier 7;
- a nominal retaining of the package 2 on the carrier 7, in particular a nominal gripping of the package 2 by means of gripping unit 10.

According to an aspect of the present invention, the aforesaid electrically-powerable component comprises the sensor member 18. In particular, the sensor member 18 defines the aforesaid electrically-powerable component.

Accordingly, the receiver 8 is configured for powering the sensor member 18, upon passage of carrier 7 trough powering station P, with electrical energy received from the transmitter 12.

For example, during the passage of carrier 7 through powering station P, the sensor member 18 is powered (via the receiver 8) for detecting a weight of the package 2 received.

In this way, a simple and effective electric powering of a sensor member 18 on the carrier 7 may be carried out, without interfering with planar motor 11 and without the need for complicated electrical energy transmission system, which would be incompatible with the planar motor 11 (such as cables or other complicated and/or cumbersome means).

Advantageously, each carrier 7 includes an electrical energy storage member 19, such as a battery, electrically connected with the receiver 8 and with the component 10, 18 and configured to store electrical energy supplied from the receiver 8, in particular for a predetermined amount of time, and to supply the stored electrical energy to the component 10, 18.

More specifically, the storage member is electrically powered upon passage of the carrier 7 through powering station P, e.g. through the aforementioned first powering station P.

Then, the storage member may retain the receiver electrical energy while carrier 7 advances along advancement path A from receiving station R to releasing station Q.

In this way, component 10, 18 may be effectively powered between these two stations R, Q and in particular between the two first and second transmitters 12 (and therefore between the two first and second powering stations P).

Thanks to this configuration, sensor member 18 may continue to detect the aforementioned physical quantity even when receiver 8 does not interact with transmitter 12.

Similarly, gripping unit 10 may be powered in between the receiving station R and the releasing station Q, for example at an intermediate station M (Figure 2) spaced apart from the two stations R, Q. In this way, a maintenance on each carrier 7 may be eased, as well as a discard of a faulty package 2, at intermediate station M, without the need for a further powering station (and a further transmitter) located at such intermediate station M.

In one embodiment, when carrier 7 includes the aforesaid storage member, conveyor device 6 may expediently comprise only one powering station P, with only one transmitter 12, located either at receiving station R or at releasing station Q, or somewhere in between these latter and opportunely along the table 14.

In this case, the component 10, 18 may be cyclically powered only once by interaction of the receiver 8 with the single transmitter 12. As a result, only one powering station P may be needed, with an even more reduced wear and simplified architecture.

The advantages of conveyor device 6 according to the present invention will be clear from the foregoing description.

In particular, a relatively simple, reliable, flexible, safe and wearproof conveyor device 6 for transporting the packages 2 is obtained.

In fact, wear is substantially reduced, if not eliminated, due to the fact that support plates 13 levitate over table 14 and due to the fact that receivers 8 and transmitters 12 interact with one another with little or no contact.

Moreover, thanks to the planar motor 11 system, the movement of carriers 7 is very flexible, with respect for example to a simple belt conveyor, and thus easily adaptable to any variation in production speed.

Clearly, changes may be made to conveyor device 6 as described herein without, however, departing from the scope of protection as defined in the accompanying claims.

In particular, each carrier 7 may include only one of the gripping unit 10 and the sensor member 18 or both the gripping unit 10 and the sensor member 18.

That is, the electrically-powerable component of the carrier 7 may comprise, and in particular may be defined, by one or both of the above.

In addition, the electrically-powerable component may comprise, and in particular may be defined by, another electrically-powerable unit of device or member not extensively disclosed in the present description, such as a labeling device, a tag reader device (e.g. a QR code reader), a capping device, a device for rotating the received package, a printing device for printing on the received package, etc.

According to an aspect, one or more carriers 7 may include an electrical energy storage member 19 comprising a super capacitor, electrically connected with the receiver 8 and with the component 10, 18 and configured to store electrical energy supplied from the receiver 8 and to supply the stored electrical energy to the component 10, 18. As considered herein, a supercapacitor is a high-capacity capacitor, e.g. with a capacitance value higher than solid-state capacitors. A super capacitor is able to store 10 to 100 times more energy per unit volume or mass than electrolytic capacitors; receive and deliver charge faster than batteries; and/or tolerate more charge and discharge cycles than rechargeable batteries.

A carrier 7 may be configured to advance the receiver 8 along the energizing track 12a for interacting therewith (e.g. wirelessly or with sliding contact) and being thus energized. The energy received may be at least partially stored in the energy storage member comprising the super capacitor.

Thanks to the use of a super capacitor the amount of time needed for the receiver to interact with the energizing track can be reduced, insofar as the charging time of the super capacitor is reduced.

In particular, a portion of the energy may be used at the energizing track 12a and a portion of the energy may be used away from the energizing track 12a, i.e. the energy stored in the energy storage member 19. In alternative, the totality of the energy received may be used away from the energizing track 12a, e.g. at a processing station, by discharging of the energy storage member 19.

Advantageously, supercapacitors can be discharged very quickly, thus providing considerable electrical power to the components. This power can be used by on-board actuators to perform operations during the application's duty cycle (actively moving the gripping unit, increasing degrees of freedom, etc.).

Advantageously, supercapacitors are light components which do not add to the payload, limiting the application of the conveyor device.

## Claims

1. - Conveyor device (6) for advancing articles (2), the conveyor device (6) comprising:
- a plurality of carriers (7), each carrier (7) being configured to receive and carry at least one article (2) and including at least one electrically-powerable component (10, 18) and a receiver (8) configured for receiving electrical energy and powering the component (10, 18);
- a planar motor (11) configured to move the carriers (7) selectively and independently from one another;
- at least one powering station (P); and
- a transmitter (12) located at the powering station (P) and configured for transmitting electrical energy;
wherein the planar motor (11) is configured to selectively move each carrier (7) through said powering station (P), whereby the receiver (8) receives electrical energy from the transmitter (12) thereby powering the component (10, 18).

2. - Conveyor device as claimed in claim 1, wherein the transmitter (12) is configured for transmitting electrical energy to the receiver (8) by means of wireless power transfer.

3. - Conveyor device as claimed in claim 1 or 2, wherein each carrier (7) is configured to advance the at least one received article (2) along an advancement path (A),
the advancement path (A) extends, at least in part, through said powering station (P),
the transmitter (12) comprises an energizing track (12a) extending along at least part of the powering station (P) and configured for energizing the receiver (8) with electrical energy,
and wherein each carrier (7) is configured to advance the receiver (8) along the energizing track (12a) for interacting therewith and being thus energized.

4. - Conveyor device as claimed in any one of the foregoing claims, wherein each carrier (7) includes a gripping unit (10), the gripping unit (10) being configured to grip at least one article (2) at a receiving station (R), to retain such article (2) during the movement of the carrier (7), and to release such article (2) at a releasing station (Q);
said electrically-powerable component comprising the gripping unit (10).

5. - Conveyor device as claimed in claim 4, wherein the gripping unit comprises:
- a gripper member (10a) controllable in an open configuration, for receiving or releasing the article (2), and in a closed configuration, for gripping and retaining the article (2); and
- an actuator member (10b) for controlling the gripper member (10a) between the open configuration and the closed configuration;
and wherein the receiver (8) is configured for powering the actuator member (10b) with electrical energy received from the transmitter (12) at said powering station (P) .

6. - Conveyor device as claimed in any one of the foregoing claims, wherein each carrier (7) includes at least one sensor member (18) configured to detect a physical quantity indicative of the article (2) received by the carrier (7);
and wherein said electrically-powerable component comprises the at least one sensor member (18).

7. - Conveyor device as claimed in claim 6, wherein the receiver (8) is configured for powering the sensor member (18) with electrical energy received from the transmitter (12) at said powering station (P);
and wherein the sensor member (18) is configured to detect one or more of the following:
- a weight of the received article (2);
- a temperature of the pourable product within the article (2);
- an angular and/or linear acceleration of the respective carrier (7);
- an angular and/or linear speed of the respective carrier (7);
- a humidity level;
- a fill level of the received article (2);
- the presence of the article (2) on the respective carrier (7);
- a nominal positioning of the article (2) on the respective carrier (7);
- a nominal retaining of the received article (2) on the carrier (7).

8. - Conveyor device as claimed in any one of the foregoing claims, wherein each carrier (7) includes an electrical energy storage member (19) electrically connected with the receiver (8) and with the component (10, 18) and configured to store electrical energy supplied from the receiver (8) and to supply the stored electrical energy to the component (10, 18), preferably wherein the electrical energy storage member (19) is a super capacitor.

9. - Conveyor device as claimed in any one of the foregoing claims, wherein the conveyor device (6) is configured for conveying the articles (2) from an inlet station (I) to an outlet station (O),
wherein the carriers (7) are configured to advance the articles (2) from a receiving station (R) to a releasing station (Q),
wherein the conveyor device (6) comprises:
- an inlet conveyor (16) configured to advance the articles (2) from the inlet station (I) to the receiving station (R) at which each article (2) is transferred from the inlet conveyor (16) onto a respective carrier (7); and
- a first said powering station (P) with a first said transmitter (12) located at said inlet conveyor (16) for transmitting electrical energy to the component (10, 18) of each respective carrier (7) at said receiving station (R);
and/or wherein the conveyor device (6) comprises:
- an outlet conveyor (17) configured to advance the articles (2) from the releasing station (Q), at which each article (2) is released from the respective carrier (2), to the outlet station (O); and
- a second said powering station (P) with a second said transmitter (12) located at said outlet conveyor (17) for transmitting electrical energy to the component (10, 18) of each respective carrier (7) at said releasing station (Q).

10. - Conveyor device as claimed in claim 9, wherein the first transmitter (12) is fixed to the inlet conveyor (16) and the second transmitter (12) is fixed to the outlet conveyor (17).

11. - Conveyor device as claimed in any one of the foregoing claims, wherein the planar motor (11) comprises:
- a base element (14) equipped with a plurality of electrically-powerable induction coils;
- a plurality of magnetic and/or ferromagnetic elements, each embedded in one respective carrier (7) and configured to electromagnetically interact with the induction coils to determine the movement of the respective carrier (7) over and along the base element (14).

12. - Conveyor device as claimed in claim 11, wherein the transmitter (12) is spaced apart from the base element (14) and electrically separated from the inductive coils.

13. - Conveyor device as claimed in any of the foregoing claims, wherein each carrier (7) further includes a control unit connected to the receiver (8) and to the component (10, 18), and configured to be supplied with electrical energy by the receiver (8) for controlling an activation of said component (10, 18).

14. - Packaging machine (1) configured for forming, sealing and folding packages (2) containing a pourable product, the packaging machine (1) comprising a conveyor device (6) as claimed in any one of the foregoing claims and configured to receive said packages (2) from the folding device and to advance the received packages (2).

15. - Method for advancing articles comprising the steps of:
a) advancing a plurality of carriers (7) along an advancement path (A) by means of a planar motor, each carrier (7) including at least one electrically-powerable component (10, 18) and a receiver (8) configured for receiving electrical energy and powering the component;
b) conveying each article along the advancement path (A) by means of one respective carrier (7);
c) selectively moving each carrier (7) through a powering station (P) including a transmitter (12) configured for transmitting electrical energy;
d) transmitting electrical energy from the transmitter (12) to the receiver (8) upon moving the carrier (7) through the powering station (P);
e) powering the component (10, 18) with the energy received from the transmitter (12).
